# EUROPÄISCHE PATENTSCHRIFT

(11) **EP 1 309 836 B1**
(45) Veröffentlichungstag und Bekanntmachung des Hinweises auf die Patenterteilung: **01.06.2005**
(21) Anmeldenummer: 01962573.0
(22) Anmeldetag: 19.07.2001
(51) Int. Cl.: G01C 21/26, G09B 29/10

(54) **VERFAHREN ZUR DARSTELLUNG EINER FAHRSTRECKE**
METHOD FOR THE DISPLAY OF A ROUTE
PROCEDE DE REPRESENTATION D'UN ITINERAIRE

(30) Priorität: 11.08.2000 DE 10039235
(43) Veröffentlichungstag der Anmeldung: 14.05.2003
(73) Patentinhaber: ROBERT BOSCH GMBH, 70442 Stuttgart (DE)
(72) Erfinder: HESSING, Bernd, 31188 Holle (DE); MEROTH, Ansgar, 71229 Leonberg-Gebersheim (DE); GEISLER, Thomas, 76133 Karlsruhe (DE)
(86) Internationale Anmeldenummer: PCT/DE2001/002713
(87) Internationale Veröffentlichungsnummer: WO 2002/014788

(56) Entgegenhaltungen:
- EP-A- 0 749 103
- WO-A-99/47892
- US-A- 5 583 494

## Beschreibung

Die Erfindung bezieht sich auf ein Verfahren zur Darstellung einer Fahrstrecke. Ein derartiges Verfahren ist insbesondere in Navigationssystemen von Kraftfahrzeugen verwendbar.

In herkömmlichen Navigationssystemen werden Kreuzungs- und Abbiegesituationen unterschiedlich dargestellt. Zum einen kann von einer Ausgabeeinheit, insbesondere einem Anzeigefeld wie z.B. einem Bildschirm, eine jeweilige Fahranweisung ausgegeben werden. Eine derartige Anweisung kann z.B. darin bestehen, dem aktuellen Straßenlauf zu folgen, oder bei der nächsten Möglichkeit in eine bestimmte Richtung abzubiegen, zu wenden usw.. Eine derartige Anweisung wird in der Regel durch eine Pfeildarstellung, eventuell mit erläuterndem Text dargestellt. Derartige Abbiegeempfehlungen sind sehr einfach gehalten, damit der Fahrer ohne Ablenkung vom Verkehrsgeschehen schnell die folgenden Aktionen überblicken kann. Für komplexere Kreuzungssituationen, z.B. Ausleitungen und Kreisverkehre usw. sind entsprechend mehrere verschiedene Darstellungen notwendig.

Eine derartige Darstellung lediglich der unmittelbar folgenden Situation wird von dem Fahrer jedoch oftmals als unbefriedigend empfunden. Bei mehreren aufeinander folgenden Fahrsituationen, z.B. mehreren Ausfahrten in einem größeren Kreuzungssystem kann es leicht zu Missverständnissen kommen, wenn der Fahrer z.B. eine Abbiegeempfehlung nicht der jeweils richtigen Abbiegung bzw. Ausfahrt zuordnet. Der Fahrer muss bei derartigen Systemen oftmals kurzfristig reagieren, da er sich nicht vorher auf die nächste Fahrsituation einstellen konnte.

Zum anderen kann die jeweilige Kreuzungs- und Abbiegesituation in einer größeren Karte dargestellt werden. Hierbei wird die Gesamtsituation und die aktuelle Position des Fahrzeugs angezeigt. Derartige Kartendarstellungen lenken den Fahrer jedoch meist stark ab, da sie eine Detailfülle zeigen, die für die jeweilige Fahrentscheidung nicht benötigt wird und vielmehr dem Zweck dient, sich einen generellen Überblick über Position und Ziel zu verschaffen. Für derartige Kartendarstellungen ist in der Regel eine entsprechende grafische Aufbereitung durch einen Grafik-Prozessor unter Nutzung eines hoch auflösenden Bildschirms durch Konstruktion von grafischen Befehlen notwendig. Somit ist der apparative Aufwand relativ hoch und führt zu einer unnötigen und zum Teil gefährlichen Ablenkung des Fahrers.

Aus der US 5,583,494 ist ein Verkehrs-Informations-Anzeige-System bekannt, bei dem Verkehrsinformationen in einer Karte dargestellt werden. Für besondere Objekte, z.B. Abzweigungen, sind hierzu Symbole vorgesehen. Die Straßen werden dadurch dargestellt, dass verschiedene Punkte der Fahrstrecke durch gerade Linien miteinander verbunden werden.

Aus der WO99/47892 ist eine Navigationsvorrichtung und ein Verfahren bekannt, bei der Bereiche, die der Reise dienen hervorgehoben einer Anzeige dargestellt werden.

Aus der EP 749 103 A1 ist eine dreidimensionale Kartendarstellung bekannt, bei der Linien von Straßen auf eine dreidimensional gestaltete Landschaftsoberfläche projiziert werden.

Der Erfindung liegt die Aufgabe zugrunde, gegenüber dem Stand der Technik Verbesserung zu schaffen und insbesondere eine einfache und dennoch sichere und vom Fahrer als angenehm empfundene Darstellung der Fahrstrecke mit reiativ geringem apparativen Aufwand zu ermöglichen.

Diese Aufgabe wird bei dem erfindungsgemäßen Verfahren gelöst, in dem zwischen einer aktuellen Position eines Fahrzeugs und einem Zielort eine Fahrstrecke ermittelt wird, ein von der aktuellen Position ausgehender Fahrabschnitt der Fahrstrecke ermittelt wird, der Fahrabschnitt in einzelne Teilbereiche unterteilt wird, die jeweils eine Fahrsituation aufweisen, jedem Teilbereich eine seiner Fahrsituation entsprechende Bildeinheit aus einer vorgegebenen Menge von Bildeinheiten zugeordnet wird, und die Bildeinheiten in einem Anzeigefeld einer Ausgabeeinheit derartig angeordnet werden, dass aufeinanderfolgende Teilbereiche des Fahrabschnitts in aneinandergrenzenden Bildeinheiten zum Erzeugen einer perspektivischen Darstellung der Fahrsituation wiedergegeben werden.

Erfindungsgemäß werden somit die von einem Navigationssystem ermittelten Daten der geplanten Fahrstrecke benutzt, um jeweils lediglich einen an die aktuelle Position eines Fahrzeuges anschließenden Fahrabschnitt anzuzeigen. Die Anzeige des Fahrabschnittes erfolgt über feste Bildeinheiten, die aus einer vorgegebenen Menge von Bildeinheiten entnommen werden. Somit kann eine standardisierte Darstellung des folgenden Fahrabschnittes durch einheitliche und leicht zu identifizierende Bildeinheiten ermöglicht werden.

Der unmittelbar folgende Fahrabschnitt wird vorteilhafterweise in derartige aufeinanderfolgende Teilbereiche zerlegt, dass zu jedem Teilbereich eine entsprechende Bildeinheit vorhanden ist. Somit können auch komplexere Situationen, bei denen z.B. zwei Abbiegungen unmittelbar aufeinanderfolgen und zwischen ihnen eine Brücke vorgesehen ist, durch eine Zerlegung in mehrere Bildeinheiten mit z.B. jeweils einer Abbiegung oder einer Brücke zerlegt werden. Hierbei wird zwar eine gestreckte Wiedergabe des tatsächlich relativ kurzen Fahrabschnittes in Kauf genommen; die Situation ist jedoch aufgrund der auseinandergezogenen Darstellung für den Fahrer besser überblickbar, da er sich an zusätzlichen Merkmalen wie z.B. in einer Bildeinheit wiedergegebenen Brücken etc. orientieren kann.

Die Bildeinheiten unterscheiden sich vorteilhafterweise durch ihre jeweilige symbolhafte Darstellung, die eine vereinfachte Darstellung der jeweiligen Fahrsituation wiedergibt. Neben einer Geradeausfahrt kann dies insbesondere eine Kurve, eine Abbiegung von einer geraden Strecke, ein Autobahnkreuz, eine Brücke usw, sein. Aufgrund der vorgegebenen, begrenzten Menge von verschiedenen Bildeinheiten lernt der Fahrer die Bedeutung der Bildeinheit im Laufe der Zeit kennen, so dass er den Inhalt des Anzeigefeldes relativ schnell erfassen kann.

Erfindungsgemäß können insbesondere auch komplexere Fahrabschnitte mit Kreuzungen und Zusammenführungen einzelner Strecken, d.h. nicht nur Straßenpläne mit Baumstrukturen, sondern auch mit Netzstrukturen, wiedergegeben werden.

Die Darstellung der Bildeinheiten erfolgt vorteilhafterweise in einer Matrix aus rechteckigen, z.B. quadratischen Bildeinheiten.

Eine vom Fahrer als angenehm empfundene perspektivische Darstellung der folgenden Fahrabschnittes kann durch zum einen eine Verkleinerung der jeweils nachfolgenden Symbole in den Bildeinheiten und zum anderen auf eine Verjüngung der Symbole in den Bildeinheiten erfolgen.

Die Erfindung wird im Folgenden anhand der beiliegenden Zeichnungen an einigen Ausführungsformen näher erläutert. Es zeigen:
- Fig. 1: eine Auswahl aus erfindungsgemäßen Bildeinheiten;
- Fig. 2: ein Anzeigefeld mit mehreren Bildeinheiten;
- Fig. 3: mehrere Ausschnitte aus einem Anzeigefeld mit mehreren Bildeinheiten;
- Fig. 4: einen weiteren Bildausschnitt aus einem Anzeigefeld;
- Fig. 5: ein Anzeigefeld eines komplexeren Fahrabschnittes.

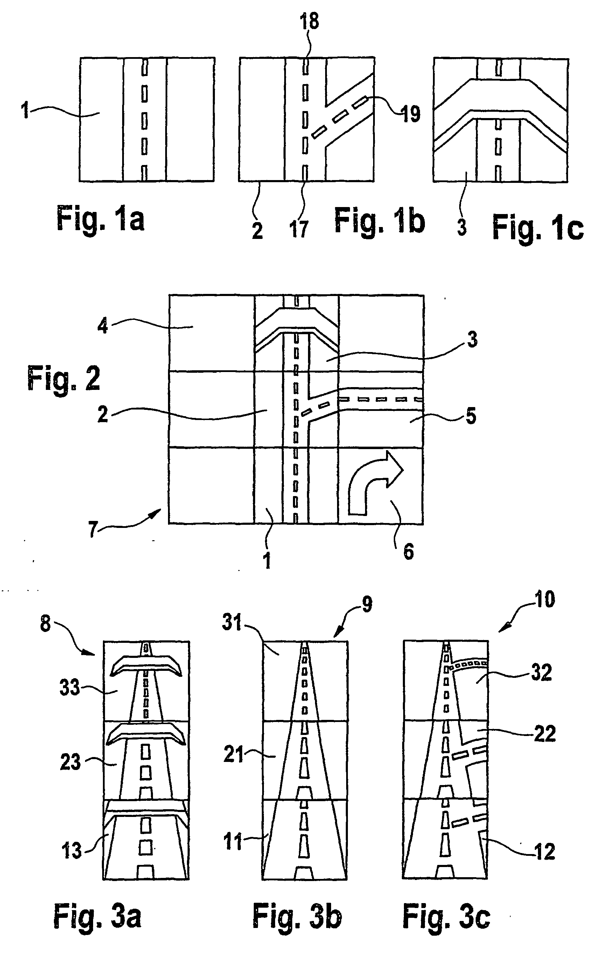

In Fig. 1 a, b, c sind eine Bildeinheit 1 für eine Geradeausfahrt, eine Bildeinheit 2 für eine Abbiegung nach rechts und eine Bildeinheit 3 für eine gerade Fahrstrecke mit kreuzender Brücke wiedergegeben.

Derartige und andere Bildeinheiten sind in Fig. 2 zu einem Anzeigefeld aus neun Bildeinheiten in einer 3 X 3-Matrix zusammengesetzt. In diesem Anzeigefeld kann der Fahrer einen Fahrabschnitt erkennen, der sich an die am unteren mittleren Ende des Anzeigefeldes 7 angeordnete aktuelle Position seines Fahrzeuges anschließt. Demnach kann der Fahrer zunächst gemäß Bildeinheit 1 dem Straßenverlauf ohne besondere Fahrsituationen folgen. Anschließend weist die von ihm befahrene Straße gemäß Bildeinheit 2 eine Abbiegung nach rechts auf, so dass der Fahrer die Wahl zwischen einer Geradeausfahrt und einem Verlassen der Straße durch Einbiegen in die rechts abzweigende Straße hat. Die in derzeitiger Fahrtrichtung weiterführende Straße weist in für den Fahrer noch erkennbarer Weise im späteren Verlauf gemäß Bildeinheit 3 eine die Straße überquerende Brücke auf. Dem Fahrer wird gemäß dem Pfeil der Bildeinheit 6 ein Verlassen der von der derzeit benutzten Straße durch die Abbiegung gemäß Bildeinheit 2 und Weiterfahrt auf der neuen Straße gemäß Bildeinheit 5 empfohlen. Die Darstellung der Brücke in Bildeinheit 3 ist hierbei für den Fahrer vorteilhaft, da er sich an der für ihn während der Fahrt sichtbaren Brücke orientieren kann und weiß, bereits vor der Brücke rechts abbiegen zu müssen. Die Bildeinheiten 4 mit freien Symbolen bzw. ohne Symbole lenken den Fahrer nicht von den wichtigen Bildeinheiten ab.

Die Bildeinheiten weisen vorteilhafterweise feste Anschlusspunkte auf, an denen entsprechende Darstellungen der Fahrbahn angrenzender Bildeinheiten direkt anschließen. In Fig. 1 b ist dies am Beispiel einer Abbiegung durch einen unteren Anschlusspunkt 17, einen oberen Anschlusspunkt 18 und eine rechten seitlichen Anschlusspunkt 19 gezeigt. Vorteilhafterweise sind die Anschlusspunkte in einer mittigen Position des jeweiligen Randes der Bildeinheit angeordnet, so dass angrenzende Bildeinheiten in einheitlicher Weise in ihren Anschlusspunkten übereinstimmen.

In den Bildausschnitten der Figuren 3 a, b, c sind die Symbole der aneinandergrenzenden Bildeinheiten 13, 23, 33; 11, 21, 31; 12, 22, 32; jeweils in aufeinanderfolgenden Bildeinheiten verkleinert wiedergegeben. Hierbei verjüngen sich die Symbole von einem unteren zu einem oberen Ende. Für den Fahrer entsteht somit beim Betrachten der Bildausschnitte 8, 9, 10 ein perspektivischer Eindruck aufgrund der Verjüngung sowie der Verkleinerung der Bildabschnitte nachfolgender Teilbereiche des Fahrabschnittes. Wie insbesondere in Fig. 3 b und Fig. 3 c erkennbar ist, können bei dem Übergang der Symbole der einzelnen Bildeinheiten durchaus kleinere Sprünge in den Seitenrändern der dargestellten Straße sowie den Mittelstreifenabschnitten entstehen, ohne dass dies vom Fahrer als störend empfunden wird. Der Fahrer ergänzend bei Erkennen der perspektivischen Darstellung der Fahrstrecke unbewusst kleinere Unstimmigkeiten zu einem von ihm als sinnvoll und durchgehend erkannten Fahrabschnitt. Somit kann durch eine begrenzte Menge von Bildeinheiten mit - relativ wenigen Vergrößerungsstufen eine Vielzahl von vom Fahrer als perspektivisch dargestellten Fahrsituationen wiedergegeben werden.

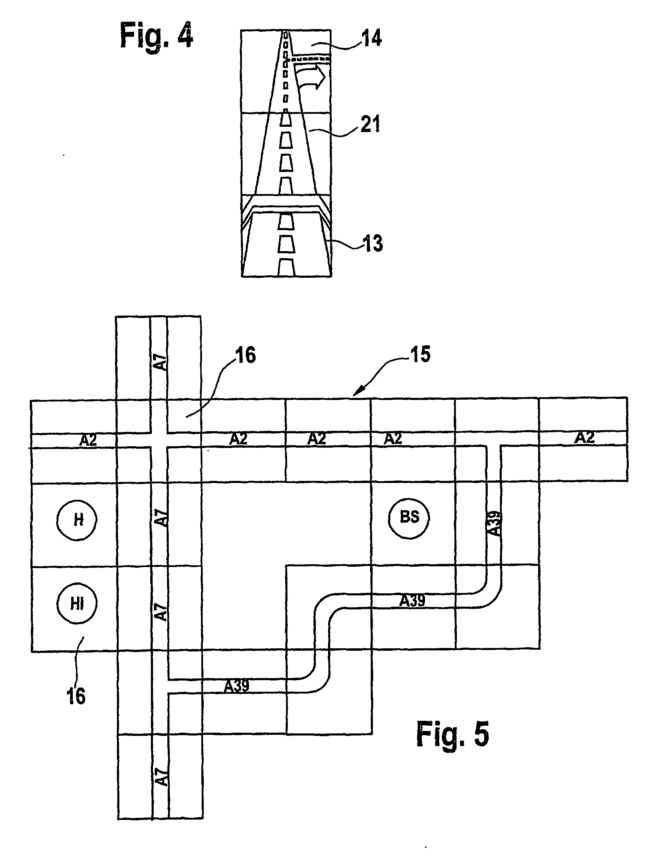

In Fig. 4 ist eine weitere perspektivische Darstellung der Fahrstrecke gezeigt, bei der der Fahrer zunächst unter einer Brücke gemäß Bildeinheit 13 durchfährt und nach einem weiteren Abschnitt des Straßenverlaufes gemäß Bildeinheit 21 die in Bildeinheit 14 dargestellte Abbiegung nach rechts mit Abbiegeempfehlung wählen kann.

Die erfindungsgemäße Darstellung kann auch zur Wiedergabe größerer Fahrabschnitte benutzt werden. So kann gemäß Fig. 5 auch ein größerer Bereich z.B. eine Autobahnabschnittes gezeigt werden, das den Fahrer über mehrere Autobahnanschlüsse informiert. Der Fahrer kann somit zum einen für seine Information einen Überblick über ein Straßennetz, das sich an seine aktuelle Position anschließt, gewinnen. Zum anderen kann er bei Auftreten höheren Verkehrsaufkommens sowie Stauungen selbsttätig eine Umgehungsstrecke wählen. Eine derartige Darstellung kann für einen Fahrer auch zur Auswahl von ihn gewünschter Einfall- und Ausfallstraßen zu einer Stadt gewählt werden. Hierbei ist gemäß Fig. 5 auch die Darstellung einer Netzstruktur von Straßen möglich.

Erfindungsgemäß wird somit eine Darstellung zusätzlicher Informationen über den für den Fahrer aktuellen Fahrabschnitt ermöglicht, ohne dem Fahrer unnötige Details über die Umgebung mitzuteilen. Die Darstellung kann mit relativ geringem Aufwand durch Auswahl verschiedener Bildeinheiten zu unterschiedlichen Fahrsituationen, gegebenenfalls auch in mehreren Vergrößerungsstufen für eine perspektivische Darstellung, erreicht werden.

Vorteilhafterweise sind die verschiedenen Bildeinheiten als Bitmap-Dateien bzw. Rastergrafik-Dateien in einem Speicher abgelegt. Hierfür wird vorteilhafterweise ein nichtflüchtiger Speicher verwendet, der diese Bitmaps dauerhaft speichern kann. Zur Darstellung einer Fahrstrecke werden die Bitmap-Dateien bzw. Rastergrafik-Dateien von einer hierfür vorgesehenen Kopiereinrichtung aus dem Speicher in den Anzeigespeicher der Anzeigevorrichtung kopiert, so dass sie direkt in der Anzeigevorrichtung angezeigt werden können.

## Patentansprüche

1. Verfahren zur Darstellung einer Fahrstrecke, bei dem
Zwischen einer aktuellen Position eines Fahrzeugs und einem Zielort eine Fahrstrecke ermittelt wird,
ein von der aktuellen Position ausgehender Fahrabschnitt der Fahrstrecke ermittelt wird,
der Fahrabschnitt in einzelne Teilbereiche unterteilt wird, die jeweils eine Fahrsituation aufweisen,
jedem Teilbereich eine seiner Fahrsituation entsprechende Bildeinheit (1, 2, 3, 4, 5, 6, 11, 12, 13, 21, 22, 23, 31, 32, 33) aus einer vorgegebenen Menge von Bildeinheiten zugeordnet wird,
**dadurch gekennzeichnet, dass**
die Bildeinheiten in einem Anzeigefeld (7, 15) einer Ausgabeeinheit derartig angeordnet werden, dass aufeinanderfolgende Teilbereiche des Fahrabschnitts in aneinandergrenzenden Bildeinheiten (1,2) zum Erzeugen einer perspektivischen Darstellung der Fahrsituation wiedergegeben werden.

2. Verfahren nach Anspruch 1, **dadurch gekennzeichnet, dass** der Fahrabschnitt derartig in Teilbereiche unterteilt wird, dass zu jedem Teilbereich eine entsprechende Bildeinheit in der Menge von Bildeinheiten vorhanden ist.

3. Verfahren nach Anspruch 1 oder 2, **dadurch gekennzeichnet, dass** sämtliche Bildeinheiten (1, 2, 3, 4, 5, 6, 11, 12, 13, 14, 21, 22, 23, 31, 32, 33) ein gleiches Format aufweisen.

4. Verfahren nach Anspruch 3, **dadurch gekennzeichnet, dass** die Bildeinheiten jeweils ein rechteckiges, vorzugsweise quadratisches Format aufweisen.

5. Verfahren nach Anspruch 3 oder 4, **dadurch gekennzeichnet, dass** die Bildeinheiten in dem Anzeigefeld in einer Matrix aus Zeilen und Spalten angeordnet sind.

6. Verfahren nach einem der Ansprüche 1 bis 5, **dadurch gekennzeichnet, dass** die Bildeinheit (1, 11, 12, 13) eines nach der aktuellen Position des Fahrzeuges folgenden ersten Teilbereiches an einem unteren Rand des Anzeigefeldes angeordnet ist.

7. Verfahren nach einem der Ansprüche 1 bis 6, **dadurch gekennzeichnet, dass** zumindest zu einigen Bildeinheiten, vorzugsweise zu Bildeinheiten von Teilbereichen mit einer Abliegevorschrift für das Fahrzeug, eine Richtungsangabe, z.B. durch einen Pfeil, vorgesehen ist.

8. Verfahren nach Anspruch 7, **dadurch gekennzeichnet, dass** die Richtungsangabe in der Bildeinheit des Teilbereiches mit Abliegevorschrift oder einer benachbarten Bildeinheit wiedergegeben ist.

9. Verfahren nach einem der Ansprüche 1 bis 8, **dadurch gekennzeichnet, dass** Bildeinheiten (21, 22, 23) nachfolgender Teilbereiche des Fahrabschnittes kleinere Symbole als Bildeinheiten (11, 12, 13) vorangegangener Teilbereiche zugeordnet werden.

10. Verfahren nach einem der Ansprüche 1 bis 9, **dadurch gekennzeichnet, dass** die Menge von Bildeinheiten eine Bildeinheit (1) für Geradeausfahrt, eine Bildeinheit (3) für Geradeausfahrt mit Brücke, eine Bildeinheit (2) für eine Abbiegung und eine Bildeinheit (16) für ein Autobahnkreuz aufweist.

11. Verfahren nach einem der Ansprüche 1 bis 10, **dadurch gekennzeichnet, dass** die Bildeinheiten als Bitmap-Dateien bzw. Rastergrafik-Dateien in einem Speicher, vorzugsweise einem nichtflüchtigen Speicher, abgelegt sind, wobei die Bitmap-Dateien bzw. Rastergrafik-Dateien zur Darstellung der Fahrstrecke mittels einer Kopiereinrichtung von dem Speicher in einen Anzeigespeicher der Anzeigevorrichtung kopiert werden.

12. Verfahren nach einem der vorhergehenden Ansprüche, **dadurch gekennzeichnet, dass** eine Fahrsituation eine Geradeausfahrt, eine Kurve, eine Abbiegung von einer geraden Strecke, ein Autobahnkreuz oder eine Brücke ist.

## Claims

1. Method for displaying a route, in which
a route between a current vehicle position and a destination is determined,
a section of the route starting from the current position is determined,
the route section is subdivided into individual area elements which each have a driving situation,
an image unit (1, 2, 3, 4, 5, 6, 11, 12, 13, 21, 22, 23, 31, 32, 33) which corresponds to its driving situation is allocated from a predetermined set of image units to each area element,
**characterized in that**
the image units are arranged in a display field (7, 15) of an output unit such that successive area elements of the route section are reproduced in adjacent image units (1, 2) in order to produce a perspective display of the driving situation.

2. Method according to Claim 1, **characterized in that** the route section is subdivided into area elements such that a corresponding image unit is available in the set of image units for each area element.

3. Method according to Claim 1 or 2, **characterized in that** all the image units (1, 2, 3, 4, 5, 6, 11, 12, 13, 14, 21, 22, 23, 31, 32, 33) are in the same format.

4. Method according to Claim 3, **characterized in that** the image units are each in a rectangular, preferably square, format.

5. Method according to Claim 3 or 4, **characterized in that** the image units in the display field are arranged in a matrix composed of rows and columns.

6. Method according to one of Claims 1 to 5, **characterized in that** the image unit (1, 11, 12, 13) of a first area element which follows the current position of the vehicle is arranged on a lower edge of the display field.

7. Method according to one of Claims 1 to 6, **characterized in that** a direction indication, for example by means of an arrow, is provided at least for some of the image units, preferably for image units for area elements with a separation rule for the vehicle.

8. Method according to Claim 7, **characterized in that** the direction indication is reproduced in the image unit of the area element with a separation rule, or in an adjacent image unit.

9. Method according to one of Claims 1 to 8, **characterized in that** image units (21, 22, 23) of successive area elements of the route section are allocated smaller symbols than image units (11, 12, 13) of previous area elements.

10. Method according to one of Claims 1 to 9, **characterized in that** the set of image units has an image unit (1) for travelling straight ahead, an image unit (3) for travelling straight ahead with a bridge, an image unit (2) for a bend, and an image unit (16) for a motorway junction.

11. Method according to one of Claims 1 to 10, **characterized in that** the image units are stored as bitmap files or rastergraphics files in a memory, preferably a non-volatile memory, with the bitmap files or rastergraphics files being copied by means of a copying device from the memory to a display memory for the display apparatus, in order to display the route.

12. Method according to one of the preceding claims, **characterized in that** a driving situation is travelling straight ahead, a curve, a bend from a straight section, a motorway junction or a bridge.

## Revendications

1. Procédé de représentation d'un itinéraire, selon lequel
- on détermine un itinéraire entre une position actuelle d'un véhicule et un lieu de destination,
- on détermine un segment de trajet de l'itinéraire à partir de la position actuelle,
- on divise le segment de trajet en différentes zones partielles présentant chacune une situation de conduite, et
- on associe à chaque zone partielle une unité d'image (1, 2, 3, 4, 5, 6, 11, 12, 13, 21, 22, 23, 31, 32, 33) d'une quantité prédéterminée d'unités d'image correspondant à une situation de conduite,
**caractérisé en ce que**
les unités d'image sont disposées sur une zone d'affichage (7, 15) d'une unité de sortie de telle sorte que des zones partielles successives du segment de trajet soient représentées par des unités d'image ( 1, 2) adjacentes pour générer une représentation en perspective de la situation de conduite.

2. Procédé selon la revendication 1,
**caractérisé en ce que**
le segment de trajet est divisé en zones partielles de telle sorte que, dans la quantité d'unités d'image, il existe une unité d'image correspondant à chaque zone partielle.

3. Procédé selon la revendication 1 ou 2,
**caractérisé en ce que**
toutes les unités d'image (1, 2, 3, 4, 5, 6, 11, 12, 13, 14, 21, 22, 23, 31, 32, 33) présentent un même format.

4. Procédé selon la revendication 3,
**caractérisé en ce que**
les unités d'image présentent respectivement un format rectangulaire, de préférence carré.

5. Procédé selon la revendication 3 ou 4,
**caractérisé en ce que**
les unités d'image sont disposées sur la zone d'affichage sous la forme d'une matrice en lignes et colonnes.

6. Procédé selon l'une quelconque des revendications 1 à 5,
**caractérisé en ce que** l'unité d'image (1, 11, 12, 13) d'une première zone partielle suivant la position actuelle du véhicule est disposée sur un bord inférieur de la zone d'affichage.

7. Procédé selon l'une quelconque des revendications 1 à 6,
**caractérisé en ce qu'**
au moins pour quelques unités d'image, de préférence pour des unités d'image de zones partielles comprenant un règlement de changement de direction pour le véhicule, une indication de direction, par exemple à l'aide d'une flèche, est prévue.

8. Procédé selon la revendication 7,
**caractérisé en ce que**
l'indication de direction est représentée dans l'unité d'image de la zone partielle comprenant un règlement de changement de direction ou dans une unité d'image voisine.

9. Procédé selon l'une quelconque des revendications 1 à 8,
**caractérisé en ce que**
des symboles plus petits sont associés aux unités d'image (21, 22, 23) de zones partielles du segment de trajet suivantes qu'aux unités d'image (11, 12, 13) de zones partielles précédentes.

10. Procédé selon l'une quelconque des revendications 1 à 9,
**caractérisé en ce que**
la quantité d'unités d'image présente une unité d'image (1) pour rouler en ligne droite, une unité d'image (3) pour rouler en ligne droite avec un pont, une unité d'image (2) pour un changement de direction et une unité d'image (16) pour un échangeur d'autoroute.

11. Procédé selon l'une quelconque des revendications 1 à 10,
**caractérisé en ce que**
les unités d'image sont stockées en tant que fichiers bitmap ou de fichiers de graphiques en trame dans une mémoire, de préférence une mémoire non volatile, les fichiers bitmap ou fichiers de graphiques en trame étant copiés, pour représenter l'itinéraire, au moyen d'un dispositif de copie de la mémoire dans une mémoire d'affichage du dispositif d'affichage.

12. Procédé selon l'une quelconque des revendications précédentes,
**caractérisé en ce qu'**
une situation de conduite est une conduite en ligne droite, un virage, un changement de direction par rapport à une voie droite, un échangeur d'autoroute ou un pont.
